# FASCICULE DE BREVET EUROPEEN

(11) **EP 1 482 184 B1**
(45) Date de publication et mention de la délivrance du brevet: **04.07.2007**
(21) Numéro de dépôt: 04291331.9
(22) Date de dépôt: 26.05.2004
(51) Int. Cl.: F16B 2/24, F16B 5/06

(54) **Attache élastique pour la fixation de deux piéces l'une sur l'autre**
Federnder Verbinder zum Aufeinanderbefestigen zweier Werkstücke
Elastic clip for securing one on the other two workpieces

(30) Priorité: 28.05.2003 FR 0306531; 21.01.2004 FR 4000556
(43) Date de publication de la demande: 01.12.2004
(73) Titulaire: Attax, 75116 Paris (FR)
(72) Inventeur: De Azevedo, Helder, 28700 Sainville (FR); Dubost, Dominique, 78170 Celle-St-Cloud (FR)
(74) Mandataire: Habasque, Etienne J. Jean-François

(56) Documents cités:
- EP-A- 0 855 523
- DE-A- 3 245 056

## Description

La présente invention concerne une attache élastique pour la fixation de deux pièces l'une sur l'autre.

De telles attaches élastiques trouvent de nombreuses applications en particulier dans l'industrie automobile pour assurer la fixation de deux pièces d'équipement d'un véhicule l'une sur l'autre.

Il existe en effet dans l'état de la technique, des attaches élastiques de ce type qui présentent la forme générale d'un V comportant une portion intermédiaire à partir de laquelle s'étendent des ailes latérales.

Une telle attache est connue du document EP-A-0 855 523 qui décrit une attache selon le préambule de la revendication indépendante.

Ces ailes latérales de l'attache sont alors munies de moyens formant patte externe comportant des moyens en forme de crochet élastique à franchissement de point dur, d'accrochage de l'attache sur les bords d'une lumière par exemple d'une première pièce et de moyens formant patte interne munis de moyens d'accrochage de la seconde pièce afin d'assurer la fixation de cette seconde pièce sur la première.

Dans l'état de la technique, les moyens formant patte interne de l'attache s'étendent à partir de la portion intermédiaire de celle-ci, sur une partie de la hauteur des moyens formant patte externe et définissent un passage de réception de la seconde pièce.

Cependant, les attaches de ce type présentent un certain nombre d'inconvénients, notamment au niveau de la difficulté d'introduction de la seconde pièce dans le passage défini par les moyens formant patte interne de l'attache et au niveau de la fiabilité de la fixation.

Par ailleurs, de telles attaches peuvent également être source de vibration et donc de bruit.

Le but de l'invention est donc de résoudre ces problèmes.

A cet effet, l'invention a pour objet une attache élastique pour la fixation de deux pièces l'une sur l'autre présentant la forme générale d'un V comportant une portion intermédiaire à partir de laquelle s'étendent des ailes latérales munies de moyens formant patte externe comportant des moyens en forme de crochet élastique à franchissement de point dur, d'accrochage de l'attache sur les bords d'une lumière d'une première pièce et de moyens formant patte interne munis de moyens d'accrochage de la seconde pièce, afin de fixer cette seconde pièce sur la première, caractérisée en ce que les moyens formant patte interne comportent des portions repliées vers l'intérieur de l'attache en direction de la portion intermédiaire de celle-ci, en ce que les moyens d'accrochage de la seconde pièce sont prévus sur ces portions repliées des moyens formant patte interne et en ce que les zones de pliage de celles-ci sont prévues au niveau des moyens en forme de crochet des moyens formant patte externe.

Suivant d'autres caractéristiques :
- chaque aile latérale de l'attache en V comporte une patte externe centrale de part et d'autre de laquelle est prévue une patte interne latérale ;
- les extrémités des pattes internes latérales de chaque côté de l'attache sont reliées par une plaque d'appui sur les bords de laquelle sont ménagés les moyens d'accrochage de la seconde pièce ;
- les moyens d'accrochage se présentent sous la forme de harpons ;
- les moyens d'accrochage de la seconde pièce sont formés par les extrémités des portions repliées des moyens formant patte interne et sont adaptés pour venir en appui contre des moyens de butée de cette seconde pièce ;
- les extrémités des pattes internes latérales de chaque côté de l'attache sont reliées par une plaque d'appui dont les bords forment les moyens d'accrochage de la seconde pièce ;
- les moyens de butée de la seconde pièce sont formés par des parties en relief de celle-ci ;
- les moyens de butée de la seconde pièce sont formés par un bord d'une lumière de celle-ci ;
- les moyens de butée de la seconde pièce sont formés par un épaulement de celle-ci ; et
- elle est réalisée d'une seule pièce à partir d'un flan de tôle par découpe et déformation de celui-ci.

L'invention sera mieux comprise à la lecture de la description qui va suivre, donnée uniquement à titre d'exemple et faite en se référant aux dessins annexés, sur lesquels :
- la Fig.1 représente une vue de côté d'une attache élastique selon l'invention en position de montage et de fixation de deux pièces l'une sur l'autre ;
- la Fig.2 représente une vue en perspective d'une telle attache ;
- la Fig.3 représente une variante de réalisation de cette attache ; et
- la Fig.4 représente une vue en perspective de l'attache illustrée sur la figure 3.

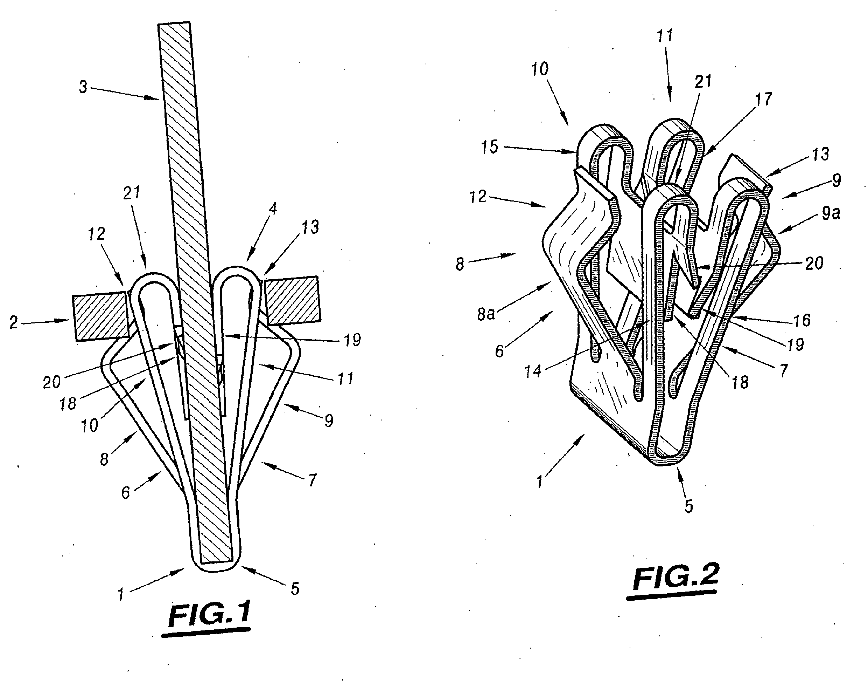

On a en effet représenté sur ces figures 1 et 2, une attache élastique qui est désignée par la référence générale 1 et qui permet d'assurer la fixation de deux pièces l'une sur l'autre, ces pièces étant formées par exemple par des pièces d'équipement d'un véhicule automobile.

L'une des pièces est désignée par la référence générale 2 sur ces figures, tandis que l'autre pièce est désignée par la référence générale 3.

La première pièce, telle que par exemple la pièce 2 comporte une lumière désignée par la référence générale 4 dans laquelle est engagée l'attache 1. La seconde pièce, par exemple 3, est quant à elle accrochée sur l'attache 1.

A cet effet, cette attache élastique présente la forme générale d'un V comportant une portion intermédiaire désignée par la référence générale 5 à partir de laquelle s'étendent des ailes latérales désignées par les références générales 6 et 7 sur ces figures.

Ces ailes latérales 6 et 7 de l'attache 1, sont munies de moyens formant patte externe, désignés par les références générales 8 et 9 sur ces figures et de moyens formant patte interne désignés par les références générales 10 et 11.

En fait, les moyens formant patte externe de l'attache comportent comme cela est visible plus clairement sur la figure 2, une patte externe centrale de chaque côté de l'attache, respectivement 8a et 9a, munie par exemple à proximité de son extrémité libre, de moyens en forme de crochet élastique à franchissement de point dur, désignés par les références générales 12 et 13 sur ces figures, pour assurer l'accrochage élastique de l'attache sur les bords de la lumière 4 de la première pièce 2.

Les moyens formant patte interne désignés par les références générales 10 et 11 comprennent quant à eux de chaque côté de l'attache, deux pattes internes respectivement 14, 15 et 16, 17, disposées de part et d'autre de chaque patte externe 8a et 9a, respectivement.

Comme cela est illustré sur ces figures, ces pattes internes comprennent des portions repliées vers l'intérieur de l'attache en direction de la portion intermédiaire 5 de celle-ci, ces portions se présentant par exemple sous la forme de plaques d'appui désignées par les références générales 18 et 19 sur ces figures, reliant entre elles les pattes correspondantes de chaque côté de l'attache.

Ces plaques d'appui sont munies de moyens d'accrochage de la seconde pièce 3, ces moyens d'accrochage étant par exemple formés par des harpons tels que le harpon 20 ménagé sur l'un des bords de la plaque d'appui 18 de raccordement des pattes internes 14 et 15.

En fait, les zones de pliage de ces pattes internes telles que par exemple la zone désignée par la référence générale 21 sur cette figure, pour la patte interne 14, sont prévues au niveau des moyens en forme de crochet 12,13 des pattes externes.

On conçoit alors qu'une telle attache présente un certain nombre d'avantages, notamment au niveau du maintien sans jeu en position de la seconde pièce par rapport à la première. De plus, l'engagement de la seconde pièce entre les pattes internes de cette attache, est également facilité en raison de la présence des zones de pliage de celles-ci qui assurent le guidage de cette seconde pièce lors de son introduction dans l'attache.

Bien entendu, d'autres modes de réalisation encore de cette attache peuvent être envisagés et on notera que celle-ci peut être réalisée d'une seule pièce par découpe et déformation, par exemple d'un flan de tôle.

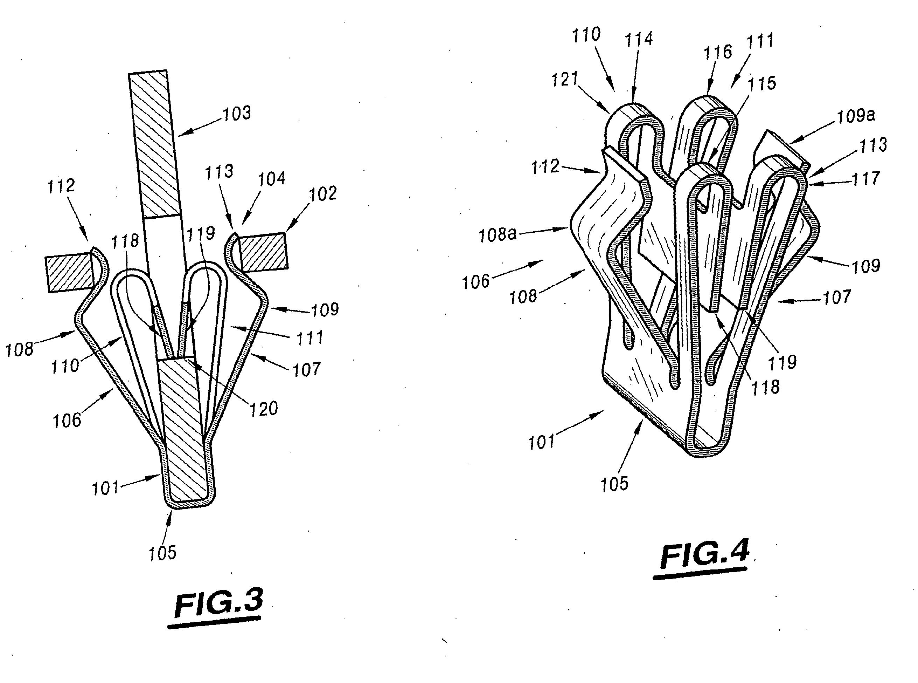

Ainsi par exemple, on a représenté sur les figures 3 et 4, une variante de cette attache élastique qui est désignée par la référence générale 101 et qui permet d'assurer la fixation de deux pièces l'une sur l'autre, ces pièces étant formées par exemple par des pièces d'équipement d'un véhicule automobile.

L'une des pièces est désignée par la référence générale 102 sur ces figures, tandis que l'autre pièce est désignée par la référence générale 103.

La première pièce, telle que par exemple la pièce 102, comporte une lumière désignée par la référence générale 104, dans laquelle est engagée l'attache 101. La seconde pièce, par exemple 103, est quant à elle accrochée sur l'attache 101.

A cet effet, cette attache élastique présente la forme générale d'un V comportant une portion intermédiaire désignée par la référence générale 105 à partir de laquelle s'étendent des ailes latérales désignées par les références générales 106 et 107 sur ces figures.

Ces ailes latérales 106 et 107 de l'attache 101, sont munies de moyens formant patte externe, désignés par les références générales 108 et 109 sur ces figures et de moyens formant patte interne désignés par les références générales 110 et 111.

En fait, les moyens formant patte externe de l'attache comportent comme cela est visible plus clairement sur la figure 2, une patte externe centrale de chaque côté de l'attache, respectivement 108a et 109a, munie par exemple à proximité de son extrémité libre, de moyens en forme de crochet élastique à franchissement de point dur, désignés par les références générales 112 et 113 sur ces figures, pour assurer l'accrochage élastique de l'attache sur les bords de la lumière 104 de la première pièce 102.

Les moyens formant patte interne désignés par les références générales 110 et 111 comprennent quant à eux de chaque côté de l'attache, deux pattes internes respectivement 114, 115 et 116, 117, disposées de part et d'autre de chaque patte externe 108a et 109a, respectivement.

Comme cela est illustré sur ces figures, ces pattes internes comprennent des portions repliées vers l'intérieur de l'attache en direction de la portion intermédiaire 105 de celle-ci, ces portions se terminant par exemple sous la forme de plaques d'appui désignées par les références générales 118 et 119 sur ces figures, reliant entre elles les extrémités des pattes correspondantes de chaque côté de l'attache.

Les bords avant de ces plaques d'appui forment en fait des moyens d'accrochage de la seconde pièce 103 dans la mesure où ces plaques d'appui sont adaptées pour venir en butée contre des moyens de butée complémentaire de cette pièce 103.

Dans l'exemple de réalisation représenté sur ces figures, la pièce 103 comporte une lumière 120, contre un bord de laquelle viennent en appui les plaques 118 et 119 de l'attache afin d'assurer le blocage en position de cette attache et de la pièce 103.

Il va de soi bien entendu que d'autres modes de réalisation peuvent être envisagés.

Ainsi par exemple, les pattes internes peuvent comporter des moyens d'accrochage de la seconde pièce présentant des formes différentes de celles illustrées.

De même, des moyens de butée de cette pièce différents d'un bord d'une lumière de celle-ci peuvent également être envisagés.

Ainsi par exemple, des moyens de butée formés par des parties en relief telles que par exemple un épaulement de cette pièce, peuvent également être envisagés.

En fait, les zones de pliage de ces pattes internes, telles que par exemple la zone désignée par la référence générale 121 sur ces figures, pour la patte interne 114, sont prévues au niveau des moyens en forme de crochet 112, 113, des pattes externes.

On conçoit alors qu'une telle attache présente un certain nombre d'avantages, notamment au niveau du maintien sans jeu en position de la seconde pièce par rapport à la première.

De plus, l'engagement de la seconde pièce entre les pattes internes de cette attache, est également facilité en raison de la présence des zones de pliage de celle-ci, qui assure le guidage de cette seconde pièce lors de son introduction dans l'attache.

Bien entendu, d'autres modes de réalisation encore de cette attache peuvent être envisagés, et on notera que celle-ci peut également être réalisée d'une seule pièce par découpe et déformation, par exemple d'un flan de tôle.

## Revendications

1. Attache élastique pour la fixation de deux pièces l'une sur l'autre présentant la forme générale d'un V comportant une portion intermédiaire (5 ;105) à partir de laquelle s'étendent des ailes latérales (6,7 ;106,107) munies de moyens formant patte externe (8,9 ;108,109) comportant des moyens en forme de crochet élastique (12,13 ; 112,113) à franchissement de point dur, d'accrochage de l'attache (1 ; 101) sur les bords d'une lumière (4 ;104) d'une première pièce (2 ; 102) et de moyens formant patte interne (10,11 ; 110,111) munis de moyens d'accrochage (20 ; 118,119) de la seconde pièce (3 ; 103), afin de fixer cette seconde pièce (3 ; 103) sur la première (2 ; 102), **caractérisée en ce que** les moyens formant patte interne (10,11 ; 110, 111) comportent des portions (18,19 ; 118, 119) repliées vers l'intérieur de l'attache en direction de la portion intermédiaire (5 ; 105) de celle-ci, **en ce que** les moyens d'accrochage (20 ; 118,119) de la seconde pièce sont prévus sur ces portions repliées des moyens formant patte interne et **en ce que** les zones de pliage (21 ; 121) de celles-ci sont prévues au niveau des moyens en forme de crochet (12,13 ; 112,113) des moyens formant patte externe (8,9 ; 108,109).

2. Attache selon la revendication 1, **caractérisée en ce que** chaque aile latérale (6,7 ; 106,107) de l'attache en V (1 ; 101) comporte une patte externe centrale (8a,9a ; 108a, 109a) de part et d'autre de laquelle est prévue une patte interne latérale (14,15,16,17; 114,115,116,117).

3. Attache selon l'une quelconque des revendications 1 ou 2, **caractérisée en ce que** les extrémités des pattes internes latérales (14,15,16,17) de chaque côté de l'attache sont reliées par une plaque d'appui (18,19) sur les bords de laquelle sont ménagés les moyens d'accrochage (20) de la seconde pièce.

4. Attache selon la revendication 3, **caractérisée en ce que** les moyens d'accrochage se présentent sous la forme de harpons.

5. Attache élastique selon la revendication 1 ou 2, **caractérisée en ce que** les moyens d'accrochage (118,119) de la seconde pièce sont formés par les extrémités des portions repliées des moyens formant patte interne et sont adaptés pour venir en appui contre des moyens de butée (120) de cette seconde pièce (103).

6. Attache selon la revendication 5, **caractérisée en ce que** les extrémités des pattes internes latérales (114,115,116,117) de chaque côté de l'attache sont reliées par une plaque d'appui (118,119) dont les bords forment les moyens d'accrochage de la seconde pièce.

7. Attache selon l'une quelconque des revendications 5 ou 6, **caractérisée en ce que** les moyens de butée de la seconde pièce (103) sont formés par des parties en relief de celle-ci.

8. Attache selon la revendication 7, **caractérisée en ce que** les moyens de butée de la seconde pièce sont formés par un bord d'une lumière (120) de celle-ci.

9. Attache selon la revendication 7, **caractérisée en ce que** les moyens de butée de la seconde pièce sont formés par un épaulement de celle-ci.

10. Attache selon l'une quelconque des revendications précédentes, **caractérisée en ce qu**'elle est réalisée d'une seule pièce à partir d'un flan de tôle par découpe et déformation de celui-ci.

## Claims

1. Spring clip for fixing two parts to each other, in the general shape of a V comprising an intermediate portion (5; 105) from which the lateral wings (6, 7; 106, 107) extend, provided with outward tab means (8, 9; 108, 109) comprising angled spring means (12, 13; 112, 113) for passing a point of resistance and for holding the clip (1; 101) on the edges of a hole (4; 104) in a first part (2; 102) and with inward tab means (10, 11; 110, 111) provided with means (20; 118, 119) for gripping the second part (3; 103), in order to fix this second part (3; 103) to the first (2; 102), which clip is **characterized in that** the inward tab means (10, 11; 110, 111) comprise portions (18, 19; 118, 119) which are bent toward the interior of the clip in the direction of its intermediate portion (5; 105), **in that** the means (20; 118, 119) for gripping the second part are situated on these bent portions of the inward tab means, and **in that** the points where the latter are bent (21; 121) are situated adjacent to the angled means (12, 13; 112, 113) of the outward tab means (8, 9; 108, 109).

2. Clip according to Claim 1, **characterized in that** each lateral wing (6, 7; 106, 107) of the V-shaped clip (1; 101) comprises a central outward tab (8a, 9a; 108a, 109a), situated on each side of which is a lateral inward tab (14, 15, 16, 17; 114, 115, 116, 117).

3. Clip according to either of Claims 1 and 2, **characterized in that** the ends of the lateral inward tabs (14, 15, 16, 17) on each side of the clip are connected by a bearing plate (18, 19), the edges of which have the means (20) for gripping the second part.

4. Clip according to Claim 3, **characterized in that** the gripping means are in the form of barbs.

5. Spring clip according to Claim 1 or 2, **characterized in that** the means (118, 119) for gripping the second part are formed by the ends of the bent portions of the inward tab means and are adapted to bear against abutment means (120) on this second part (103).

6. Clip according to Claim 5, **characterized in that** the ends of the lateral inward tabs (114, 115, 116, 117) on each side of the clip are connected by a bearing plate (118, 119), the edges of which form the means for gripping the second part.

7. Clip according to either of Claims 5 and 6, **characterized in that** the means of abutment of the second part (103) are formed by parts of the latter that are in relief.

8. Clip according to Claim 7, **characterized in that** the means of abutment of the second part are formed by an edge of a hole (120) formed in the latter.

9. Clip according to Claim 7, **characterized in that** the means of abutment of the second part are formed by a shoulder on the latter.

10. Clip according to any one of the preceding claims, **characterized in that** it is made in one piece from a sheet-metal blank by cutting and deforming it.

## Patentansprüche

1. Federndes Verbindungsstück zur Befestigung von zwei Teilen aufeinander, welches die allgemeine Form eines V aufweist, mit einem Zwischenbereich (5; 105), von dem aus sich Seitenflügel (6, 7, 106, 107) erstrecken, die mit Außenanhängsel bildenden Mitteln (8, 9; 108, 109) versehen sind, welche Mittel in Form eines elastischen Hakens (12, 13; 112, 113) zum Überwinden einer harten Stelle und zum Einhaken des Verbindungsstücks (1; 101) an den Kanten eines Langlochs (4; 104) eines ersten Teils (2; 202) aufweisen, und mit Innenanhängsel bildenden Mitteln (10, 11; 110, 111), die mit Mitteln zum Einhaken (20; 118, 119) des zweiten Teils (3; 103) versehen sind, um dieses zweite Teil (3; 103) auf dem ersten (2; 202) zu befestigen, **dadurch gekennzeichnet, dass** die Innenanhängsel bildenden Mittel (10, 11; 110, 111) Bereiche (18, 19; 118, 119) aufweisen, die zum Inneren des Verbindungsstücks hin in Richtung dessen Zwischenbereichs (5; 505) übergeschlagen sind, dass die Einhakmittel (20; 118, 119) für das zweite Teil an diesen übergeschlagenen Bereichen der Innenanhängsel bildenden Mittel vorgesehen sind, und dass deren Umschlagbereiche (21; 121) auf der Höhe der hakenförmigen Mittel (12, 13; 112, 113) der Außenanhängsel bildenden Mittel (8, 9; 108, 109) vorgesehen sind.

2. Verbindungsstück gemäß Anspruch 1, **dadurch gekennzeichnet, dass** jeder Seitenflügel (6, 7; 106, 107) des V-förmigen Verbindungsstücks (1; 101) ein mittleres Außenanhängsel (8a, 9a; 108a, 109a) aufweist, beidseits dessen ein seitliches Innenanhängsel (14, 15, 16, 17; 114, 115, 116, 117) vorgesehen ist.

3. Verbindungsstück gemäß irgendeinem der Ansprüche 1 oder 2, **dadurch gekennzeichnet, dass** die Enden der seitlichen Innenanhängsel (14, 15, 16, 17) auf jeder Seite des Verbindungsstücks durch eine Auflageplatte (18, 19) verbunden sind, an deren Kanten die Einhakmittel (20) für das zweite Teil ausgebildet sind.

4. Verbindungsstück gemäß Anspruch 3, **dadurch gekennzeichnet, dass** sich die Einhakmittel in Form von Gabelankern darstellen.

5. Federndes Verbindungsstück gemäß Anspruch 1 oder 2, **dadurch gekennzeichnet, dass** die Einhakmittel (118, 119) für das zweite Teil von den Enden der übergeschlagenen Bereiche der Innenanhängsel bildenden Mittel gebildet und dafür eingerichtet sind in Auflage gegen Anschlagseinrichtungen (120) dieses zweiten Teils (103) zu gelangen.

6. Verbindungsstück gemäß Anspruch 5, **dadurch gekennzeichnet, dass** die Enden der seitlichen Innenanhängsel (114, 115, 116, 117) auf jeder Seite des Verbindungsstücks durch eine Auflageplatte (118, 119) verbunden sind, deren Kanten die Einhakmittel für das zweite Teil bilden.

7. Verbindungsstück gemäß irgendeinem der Ansprüche 5 oder 6, **dadurch gekennzeichnet, dass** die Anschlagsmittel des zweiten Teils (103) von dessen erhaben ausgebildeten Bereichen gebildet sind.

8. Verbindungsstück gemäß Anspruch 7, **dadurch gekennzeichnet, dass** die Anschlagsmittel des zweiten Teils von einer Kante eines Langlochs (120) in diesem gebildet sind.

9. Verbindungsstück gemäß Anspruch 7, **dadurch gekennzeichnet, dass** die Anschlagsmittel des zweiten Teils von einem Ansatz dieses Teils gebildet sind.

10. Verbindungsstück gemäß irgendeinem der vorherigen Ansprüche, **dadurch gekennzeichnet, dass** es aus einem einzigen Stück anhand eines Blechplättchens durch dessen Zuschnitt und Verformung hergestellt ist.
